**Europäisches Patentamt**

**European Patent Office**

**Office européen des brevets**

(19)

(11) Veröffentlichungsnummer: **0 198 165 B1**

(12) **EUROPÄISCHE PATENTSCHRIFT**

(45) Veröffentlichungstag der Patentschrift:
**05.07.89**

(51) Int. Cl.⁴: **B 27 K 3/50,** B 27 K 3/34,
C 09 D 3/28, C 09 D 3/64

(21) Anmeldenummer: **86101561.8**

(22) Anmeldetag: **06.02.86**

(54) **Holzkonservierungsmittel.**

(30) Priorität: **13.04.85 DE 3513276**

(43) Veröffentlichungstag der Anmeldung:
**22.10.86 Patentblatt 86/43**

(45) Bekanntmachung des Hinweises auf die Patenterteilung:
**05.07.89 Patentblatt 89/27**

(84) Benannte Vertragsstaaten:
**AT BE CH DE FR GB IT LI LU NL**

(56) Entgegenhaltungen:
**EP-A- 0 043 035**
**DE-A- 3 004 249**
**DE-A- 3 004 319**

(73) Patentinhaber: **DESOWAG Materialschutz GmbH,
Rossstrasse 76 Postfach 32 02 20,
D-4000 Düsseldorf 30 (DE)**

(72) Erfinder: **Goletz, Peter, Weserweg 90,
D-4150 Krefeld 1 (DE)**
Erfinder: **Naczinski, Luzian, Nierster Strasse 18,
D-4005 Meerkamp-Lank (DE)**
Erfinder: **Hellwig, Volker, Dipl.-Chem.,
Tiergartenstrasse 15, D-4150 Krefeld 1 (DE)**
Erfinder: **Hiller, Johannes Christian, Dr.Dipl.-Chem.,
Vinhovenweg 50, D-4044 Kaarst 2 (DE)**
Erfinder: **Metzner, Wolfgang, Dr.Chem.,
Buschstrasse 151, D-4150 Krefeld (DE)**

(74) Vertreter: **Seiler, Siegfried et al, Langhansstrasse 6,
D-5650 Solingen 11 (DE)**

ACTORUM AG

**Beschreibung**

Die vorliegende Erfindung betrifft ein Holzkonservierungsmittel, vorzugsweise Holzschutzanstrichmittel, enthaltend 0,001–5 Gew.-%, vorzugsweise 0,01–4 Gew.-%, bezogen auf 100 Gew.-Teile des Holzkonservierungsmittels, vorzugsweise Holzschutzanstrichmittels, und berechnet ohne Pigmente, Farbstoffe, Korrosionsschutzmittel oder andere Zusatzstoffe, vorzugsweise Topfkonservierungsmittels, Antiabsetzmittel, Wachse oder Verbindungen mit wachsähnlichen Eigenschaften, eines in einem wasserunlöslichen organisch-chemischen, schwerflüchtigen Lösungsmittel oder Lösungsmittelgemisch löslichen oder teilweise löslichen Biozides oder Biozidgemisches, ein flüssiges Gemisch als Hauptbestandteil, bestehend aus einem wasserunlöslichen organisch-chemischen, schwerflüchtigen Lösungsmittel oder Lösungsmittelgemisch, vorzugsweise öligen oder ölartigen Lösungsmittels auf der Basis eines flüssigen aliphatischen und oder aromatischen Kohlenwasserstoffes, und Wasser, ein Tensid oder Tensidgemisch sowie ggf., bezogen auf 100 Gew.-Teile des Holzschutzanstrichmittels, vorzugsweise Holzkonservierungsmittels, Pigmente, Farbstoffe, Korrosionsschutzmittel oder andere Zusatzstoffe, vorzugsweise Topfkonservierungsmittel, Antiabsetzmittel, Wachse oder Verbindungen mit wachsähnlichen Eigenschaften. Gemäß der Erfindung ist der Gewichtsanteil des wasserunlöslichen organisch-chemischen schwerflüchtigen öligen oder ölartigen Lösungsmittels oder Lösungsmittelgemisches, einschließlich der darin gelösten Bestandteile, in dem Holzkonservierungsmittel, vorzugsweise Holzschutzanstrichmittel, größer als der Gewichtsanteil des Wassers, wobei das Mittel Gewichtsanteile Wasser, Tensidgemisch sowie ein Gewichtsanteil eines wasserunlöslichen, in den organisch-chemischen Lösungsmittel oder Lösungsmittelgemisch lösliche Bindemittels aufweist.

Aus der DE-A-3 004 319 ist ein Holzkonservierungsmittel bekannt, bei dem eine weitgehende Einsparung von organisch-chemischen, wasserunlöslichen Lösungsmitteln, vorzugsweise auf der Basis von Erdölprodukten, durchgeführt wird. Dabei werden sogar Holzschutzmittel erzielt, die keine wasserunlöslichen, organisch-chemischen Lösungsmittel, insbesondere keine aromatischen Lösungsmittel, Mineralöle oder Lösungsmittel auf der Basis von Erdölprodukten enthalten, die jedoch je nach Zusammensetzung häufig den Nachteil eines verminderten Eindringvermögens aufweisen.

Aus der DE-OS-3 004 249 sind bereits Mittel zum Konservieren von Holz bekannt, bei denen das organisch-chemische, wasserunlösliche Lösungsmittel, das vorzugsweise auf der Basis von Erdölprodukten, Aromaten und dgl. besteht, zu einem erheblichen Prozentsatz durch Wasser ersetzt werden kann, so daß das organisch-chemische Lösungsmittel weitgehend eingespart bzw. in seinem Anteil verringert werden kann.

Dieses anwendungsfertige Mittel zum Konservieren von Holz und Holzwerkstoffen besteht aus 0,35 bis 10 Gew.-%, vorzugsweise 1 bis 7 Gew.-%, eines oder mehrerer in einem organisch-chemischen, schwerflüchtigen Lösungsmittel mit einem Flammpunkt über 35 °C löslicher oder teilweise löslicher Fungizide und/oder 0,3 bis 7 Gew.-%, vorzugsweise 0,5 bis 4 Gew.-%, mindestens eines in einem organisch-chemischen, schwerflüchtigen Lösungsmittel mit einem Flammpunkt über 35 °C löslichen Insektizides, und 0,5 bis 20 Gew.-%, vorzugsweise 1 bis 16 Gew.-%, eines oder mehrerer in dem organisch-chemischen, schwerflüchtigen Lösungmittel löslichen Emulgators bzw. Emulgatoren und 20 bis 0,5 Gew.-%, vorzugsweise 16 bis 1 Gew.-%, eines oder mehrerer wasserlöslicher Netzmittel sowie mehr als 0,5 bis 7,5 Gew.-%, vorzugsweise 1 bis 6 Gew.-%, eines schwerflüchtigen, organisch-chemischen Lösungsmittels mit einem Flammpunkt über 35 °C sowie mehr als 65 Gew.-%, vorzugsweise mehr als 88 Gew.-%, Wasser. Dieses Holzkonservierungsmittel enthält somit mehr als 65 Gew.-%, vorzugsweise mehr als 88 Gew.-% Wasser und nur sehr geringe Mengen des organisch-chemischen, schwerflüchtigen Lösungsmittels oder Lösungsmittelgemisches, jedoch erhöhte Emulgator- und Netzmittelkonzentrationen.

Das Holzkonservierungsmittel gemäß DE-OS-3 004 249 weist zwar den Vorteil auf, daß das organisch-chemische Lösungsmittel weitgehend eingespart werden kann, die Konzentrate lagerstabil und transportfähig sind, eine Rückverdünnung auf die anwendungsfertigen Konzentrationen möglich sind und auch eine gute Wirkung des Holzkonservierungsmittels vorhanden ist. Es hat jedoch den Nachteil, daß die Eindringtiefe des Holzkonservierungsmittels je nach Art und Zusammensetzung der Wirkstoffe nicht sehr groß ist und bei einer Bewitterung oder Alterung die Gefahr des Wirkstoffverlustes vergrößert ist.

Ziel und Aufgabe der vorliegenden Erfindung war es daher, ein Holzschutzanstrichmittel, vorzugsweise Holzkonservierungsmittel zu finden, das trotz vermindertem Anteil von evtl. umweltbelastenden, organisch-chemischen Lösungsmitteln gleiche oder verbesserte Eigenschaften aufweist, insbesondere eine hohe Eindringtiefe der holzschützenden Wirkstoffe, eine gute Temperaturstabilität und dgl.

Erfindungsgemäß wurde festgestellt, daß diesen Zielen und Aufgaben ein Holzkonservierungsmittel, vorzugsweise Holzschutzanstrichmittel, gerecht wird, enthaltend 0,001–5 Gew.-Teile, vorzugsweise 0,01–4 Gew.-Teile (bezogen auf 100 Gew.-Teile des Holzschutzanstrichmittels, vorzugsweise Holzkonservierungsmittels, und berechnet ohne Pigmente, Farbstoffe, Korrisionsschutzmittel oder andere Zusatzstoffe, vorzugsweise Topfkonservierungsmittel, Antiabsetzmittel, Wachse oder Verbindungen mit wachsähnlichen Eigenschaften), eines in einem wasserunlöslichen organisch-chemischen, schwerflüchtigen Lösungsmittel oder Lösungsmittelgemisches löslichen oder teilweise löslichen Biozides oder Biozidgemisches, ein flüssiges Gemisch als Hauptbestandteil, bestehend aus einem wasserunlöslichen organisch-chemischen, schwerflüchtigen Lösungsmittel oder Lösungmittelgemisch, vorzugsweise auf der Basis eines flüssigen, aliphatischen und oder aromatischen Kohlenwasserstoffes, und Wasser, ein Tensid oder Tensidgemisch sowie ggf. bezogen auf 100 Gew.-Teile des Holzkonservierungsmittels, vorzugsweise Holzschutzanstrichmittels, Pigmente, Farbstoffe, Korrosionsschutzmittel, Trockenstoffe (Siccative) oder andere Zusatzstoffe, vorzugsweise Topfkonservierungsmittel, Antiabsetzmittel, Wachse oder Verbindungen mit wachsähnlichen Eigenschaften. Gemäß der Erfindung ist der Gewichtsanteil des wasserunlöslichen organisch-chemischen schwerflüchtigen, vorzugsweise öligen oder ölartigen Lösungsmittels oder Lösungsmittelgemisches, einschließlich des darin gelösten Alkydharzes und/oder trocknenden pflanzlichen Öles, in dem Holzkonservierungsmittel, vorzugsweise Holzschutzanstrichmittel, größer ist als der Gewichtsanteil des Wassers. Der Gewichtsanteil des Wassers liegt um mehr als 3 Gew.-Teile, vorzugsweise um mehr als 6 Gew.-Teile, unter den Gewichtsmengen oder im Mittel enthaltenden organisch-chemischen, wasserunlöslichen, vorzugsweise öligen oder ölartigen organisch-chemischen Lösungsmittel oder des Lösungmittelgemisches.

Das Holzkonservierungsmittel, vorzugsweise Holzschutzanstrichmittel, enthält neben den genannten Gewichtsteilen eines Biozides oder Biozidgemisches 5–35 Gew.-Teile, vorzugsweise 10–30 Gew.-Teile, Wasser, 0,7–7 Gew.-Teile, vorzugsweise 0,1–5 Gew.-Teile, des Tensidgemisches, das einen Gesamt-HLB-Wert von 8–17 aufweist und mindestens ein Alkylarylsulfonat und oder ein Derivat der Alkylarylsulfonsäure enthält sowie 0,5–35 Gew.-Teile, vorzugsweise 1–25 Gew.-Teile (berechnet als Feststoff), mindestens eines wasserunlöslichen, in dem organisch-chemischen Lösungsmittel oder Lösungsmittelgemisch löslichen Alkydharzes und/oder mindestens eines trocknenden, pflanzlichen Öles, mit der Maßgabe, daß sich der Gewichtsanteil des wasserunlöslichen, organisch-chemischen schwerflüchtigen, vorzugsweise öligen oder ölartigen Lösungsmittels ergänzt auf 100 Gew.-Teile des Holzkonservierungsmittels, vorzugsweise Holzschutzanstrichmittels, berechnet ohne Pigmente, Farbstoffe, Trockenstoffe (Siccative) Korrosionsschutzmittel oder andere Zusatzstoffe, vorzugsweise Topfkonservierungsmittel, Antiabsetzmittel, Wachse oder Verbindungen mit wachsähnlichen Eigenschaften, ergibt.

Nach einer bevorzugten Ausführungsform ist der Gewichtsanteil des wasserunlöslichen organisch-chemischen, vorzugsweise schwerflüchtigen öligen oder ölartigen Lösungsmittels oder Lösungsmittelgemisches, einschließlich des darin gelösten Alkydharzes und/oder trocknenden pflanzlichen Oles in dem Holzkonservierungsmittel, vorzugsweise Holzschutzanstrichmittel, somit größer als der Gewichtsanteil des Wassers.

Das in dem Holzkonservierungsmittel, vorzugsweise Holzschutzanstrichmittel, enthaltende Alkydharz oder Alkydharzgemisch weist nach einer bevorzugten Ausführungsform eine Säurezahl (gemessen nach DIN 53402) zwischen 1–45, vorzugsweise 2–20, eine Öllänge von 30–75, vorzugsweise 40–70, und einen Phthalsäureanteil zwischen 20–40 Gew.-%, vorzugsweise 25–35 Gew.-% (bezogen auf 100 Gew.-% Alkydharz oder Alkydharzgemisch) auf. Trotz des Wasseranteils zeigt das erfindungsgemäße Holzschutzanstrichmittel eine gute Eindringtiefe.

Nach einer weiteren bevorzugten Ausführungsform sind je 100 Gew.-Teile des Holzschutzanstrichmittels, vorzugsweise Holzkonservierungsmittels, zusätzlich 0,01–35 Gew.-Teile, vorzugsweise 0,1–5 Gew.-Teile, mindestens eines Pigmentes und/oder Farbstoffes oder Mischungen von ein oder mehreren derselben im anwendungsfertigen Mittel enthalten. Gemäß dieser Ausführungsform gelingt es, holzschützende Lasuranstrichmittel, Holzschutzfarben oder farbige Holzkonservierungsmittel herzustellen bzw. die Holzkonservierungsmittel auf die gewünschte Tonung und oder Farbe einzustellen.

Obwohl der Gewichtsanteil des Wassers im Holzkonservierungsmittel, vorzugsweise Holzschutzanstrichmittel, um mehr als 3 Gew.-Teile, vorzugsweise mehr als 6 Gew.-Teile, unter den Gewichtsmengen der im Mittel enthaltenden organisch-chemischen, wasserunlöslichen, vorzugsweise öligen oder ölartigen organisch-chemischen Lösungsmittel oder des Lösungsmittelgemisches liegt, gelingt es gegenüber zahlreicher herkömmlicher Holzschutzmittel auf öl- oder ölartiger Basis vergleichbare oder verbesserte Eigenschaften, Witterungs- oder Verarbeitungseigenschaften zu erzielen.

Das in dem Holzkonservierungsmittel, vorzugsweise Holzschutzanstrichmittel, enthaltende Tensid oder Tensidgemisch weist einen Gesamt-HLB-Wert von 7 bis 18, vorzugsweise 8–17, auf, um die gewünschte Stabilität zu erzielen (Bestimmung von HLB-Werten der Tenside «The Atlas HLB-System» Speciality Chemicals Company of ICI Americas Inc., Wilminton, Delaware [1963] und G.E. Petroswki und J.R.Vanatta, J. Am. Chem. Soc., Seiten 284 bis 289 [August 1973]).

Das Tensidgemisch besteht mindestens aus einem Alkylarylsulfonat, einem Derivat der Alkylarylsulfonsäure und einem Polyoxyethylenderivat und/oder einem Polyalkylen- oder Polyalkylglykoläther oder -ester, und/oder eine oder mehrere Polyoxyethylengruppen und/oder ein oder mehrere Fettsäuregruppen enthaltenden oberflächenaktiven organisch-chemischen Verbindung.

Die Zusammensetzung der Tenside ist für die Eindringtiefe und für die Stabilität des Holzkonservierungsmittels von großer Bedeutung.

Als wasserunlösliche organisch-chemische schwerflüchtige Lösungsmittel oder Lösungsmittelgemische werden die an sich bekannten, aromatischen und oder aliphatischen Kohlenwasserstoffe oder Gemische derselben eingesetzt. Bevorzugt werden solche Lösungsmittel oder Lösungsmittelgemische verwendet, die eine Oberflächenspannung von 16 bis 37 mN/m, vorzugsweise 17 bis 35 mN/m, (gemessen bei 20 °C) aufweist und/oder die eine elektrische Leitfähigkeit von $10^{-10}$–$10^{-16}$ ohm bei 20° besitzen.

Bevorzugt werden wasserunlösliche organisch-chemische Lösungsmittel oder Lösungsmittelgemische eingesetzt, die schwerflüchtig sind, eine Verdunstungszahl über 35 und einen Flammpunkt oberhalb 50 °C aufweisen. Beispiele für derartige Lösungsmittel sind entsprechende Mineralöle oder deren Aromatenfraktionen, mineralölhaltige Lösungsmittelgemische, vorzugsweise Testbenzin und/oder Alkylbenzole.

Als Pigmente oder Farbstoffe werden die an sich bekannten anorganischen Metalloxidpigmente und/oder organische Pigmente oder Farbstoffe, wie z.B. Phthaloxyanine, Monoazopigmente, Ruß und dgl., wobei die Pigmente und/oder Farbstoffe an sich oder in deren handelsüblichen Form, z.B. gießfähige oder pastöse Zubereitungen, Pasten, Pulvern und dgl. eingesetzt werden können.

Das erfindungsgemäße Mittel ist temperaturstabil im Breich von T 233 °K bis T 318 °K. Trotz des Vorhandenseins von Bestandteilen, die der Öl- oder Wasserphase zuzuordnen sind, tritt eine Pigmentflockulation nicht ein. Bei dem Anstrich auf Holz weist der Anstrich eine gute Eindringung und Haftfestigkeit auf.

Nach einer bevorzugten Ausführungsform besteht das im Holzkonservierungsmittel enthaltene Biozid oder Biozidgemisch aus mindestens einem insektiziden Phosphorsäureester, Thiophosphorsäureester, Dithiophosphorsäureester, Thionophosphorsäureester, einem chlorierten Kohlenwasserstoff und oder Carbamat, vorzugsweise einem Pyrethroid als Insektizid, oder enthält eine Kombination von mindestens einem anderen in dem organisch-chemischen Lösungsmittel löslichen Insektiziden mit einem oder mehreren der genannten Insektiziden, vorzugsweise mit einem oder mehreren Pyrethroiden.

Als Pyrethroid oder Pyrethroidgemisch sind Permethrin, Decamethrin, Cypermethrin, Alphamethrin, Cyano-(4-fluoro-3-phenoxy-phenyl)-methyl-3-(2,2-dichloroethenyl)-2,2-dimethyl-cyclopropancarboxylat oder Gemischen von einem oder mehreren dieser Verbindungen mit anderen Insektiziden im Holzkonservierungsmittel, vorzugsweise Holzschutzanstrichmittel enthalten. Das Holzschutzmittel weist in dieser Kombination eine besonders hohe Wirksamkeit gegen holzzerstörende Insekten, deren Larven oder Eier auf.

Nach einer anderen bevorzugten Ausführungsform besteht das im Holzkonservierungsmittel enthaltene Biozid aus einem Fungizid, das aus Methylen-bis-thiocyanat, 3,4,5,6-Tetrachlor-Phthalsäuredinitril, Jodpropargylalkohol, 1-(4-Chlorphenoxy)-3,3-dimethyl-1-(1H-1,2,4-triazol-1-yl)-2-butanon), Tris(N-Cyclohexyl-Diazeniumdioxi)-Aluminium, fungiziden Tributylzinnverbindungen, 2,6-Dimethyl-4-tridecylmorpholin und/oder 1-2-(2,4-dichlorophenyl)-1,3-dioxolan-2-ylmethyl-1H-1,2,4-triazol und oder N-(Dichlorfluormethylthio)-3,6-endomethylen-Delta-4-tetrahydrophtha- limid als Fungizid oder Fungizidgemisch, vorzugsweise aus 2-Methoxycarbonyl-aminobenzimidazol und/oder 2,5-Dimethyl-N-cyclohexyl-N-methoxy-3-furancarbonsäureamid, besteht oder ein oder mehrere der Fungizide oder Fungizidgemische, enthält. Bei diesen Fungiziden oder Fungizidkombinationen werden unter Verwendung des erfindungsgemäßen Holzschutzmittels oder Holzkonservierungsmittels besonders gute Wirkungen zur Verhinderung des Befalles holzzerstörender Pflanzen, insbesondere holzzerstörender Pilze und dgl. erzielt.

Nach einer anderen bevorzugten Ausführungsform enthält das erfindungsgemäße Holzschutzanstrichmittel oder Holzkonservierungsmittel eine Kombination des bzw. der vorgenannten Fungizide und des bzw. der vorgenannten Insektizide im Verhältnis Fungizid(e) zu Insektizid(e) wie 50:1 bis 1:6, vorzugsweise 25:1 bis 1:2.

Nach einer bevorzugten Ausführungsform ist in dem Holzschutzanstrichmittel oder Holzkonservierungsmittel ein Tensidgemisch enthalten, das aus einem Gemisch von Polyoxyethylen(30)-Nonylphenol und/oder Polyalkylenglykolester und oder Isopropylamin-dodecylbenzylsulfonat besteht. Bei einem Gemisch von Polyoxyethylen(30)-Nonylphenol und Polyalkylglykoläther wird im allgemeinen ein Gewichtsverhältnis 5:1 bis 1:5, vorzugsweise 2:1 bis 1:2, eingehalten.

Bei einem Gemisch von Polyoxyethylen(30)-Nonylphenol und Polyalkylglykoläther und Isopropylamin-dodecylsulfonat ist zweckmäßig ein Gewichtsverhältnis 20:20:1 bis 1:1:5, vorzugsweise 10:10:1 bis 1:1:3, im Holzkonservierungsmittel enthalten.

Nach einer anderen bevorzugten Ausführungsform besteht das Tensid aus einem Gemisch von Alkylarylsulfonat, vorzugsweise Ca-Alkylarylsulfonat und Isopropylamin-dodecylbenzylsulfonat. Bei diesem Gemisch wird ein Gewichtsverhältnis 10:1 bis 1:5, vorzugsweise 5:1 bis 2:1, eingehalten.

Die Erfindung betrifft weiterhin ein Verfahren zur Herstellung des Holzschutzanstrichmittels oder Holzkonservierungsmittels. Gemäß dem erfindungsgemäßen Verfahren wird bzw. werden bei einer Arbeits- bzw. Verfahrenstemperatur von 278 °K bis 308 °K, vorzugsweise 280 °K bis 303 °K, in einem schnellaufenden Mischaggregat, vorzugsweise einem Schnellrührer, Dissolver, einer Kolloidmühle oder einem Dispergator, das wasserunlösliche organisch-chemische, schwerflüchtige Lösungsmittel oder Lösungsmittelgemisch, einschließlich der darin gelösten oder löslichen Bestandteile der öligen Phase mit Wasser oder den Bestandteilen der wäßrigen Phase vermischt, wobei das Tensid und/oder Tensidgemisch in einer oder den beiden Phasen gelöst oder homogen bzw. nahezu homogen verteilt wird.

Die Durchmischung wird mit einer derartigen Geschwindigkeit (unter Berücksichtigung des jeweiligen Abstandes des Rührwerkes von der Kesselwand, dem Radius des Rührers und dgl.) und so lange durchgeführt, bis die Verteilung der emulgierten Harzteilchen einen mittleren Durchmesser im Bereich von 0,1–15 μm, vorzugsweise 0,5–4 μm, erreicht hat.

Nach einer bevorzugten Ausführungsform wird die Durchmischung mit einer Rand- und/oder Umfangsgeschwindigkeit von 10–40 m/sec, vorzugsweise 15–30 m/sec, durchgeführt.

Das Wasser oder die wäßrige Phase wird gemäß dem erfindungsgemäßen Verfahren mit einer Zuführungsgeschwindigkeit von 10–100 l/min, vorzugsweise 30–70 l/min in die ölige oder ölartige Phase (wasserunlösliches organisch-chemisches Lösungsmittel und darin gelösten Bestandteilen, die in dem Mischbehälter vorgelegt sind, eingeleitet.

Der Durchmesser der Scheibe oder des Rührers beträgt zweckmäßig ¼ bis ¾ d (d = Durchmesser des Mischbehälters bzw. Kessels), vorzugsweise 0,3 d bis 0,4 d.

Bei der Verwendung einer Kolloidmühle erfolgt die Zuleitung von zwei oder mehreren Bestandteilen des Holzschutzmittels oder des gesamten Holzschutzmittels über eine Dosierpumpe, wobei das Verhältnis der öligen Phase zu der wäßrigen Phase mit Tensid bzw. öligen Phase mit Tensid zu der wäßrigen Phase 20:1 bis 1:1, vorzugsweise 5:1 bis 2:1, beträgt.

Nach einer vorteilhaften Ausführungsform des erfindungsgemäßen Verfahrens wird somit die ölige Phase, bestehend aus Alkydharz, organischen Lösemitteln, Bioziden, anorganischen sowie gegebenenfalls organischen Pigmenten, Trockenstoffen und Lackadditiven, wie z.B. Antiabsetzmitteln, Dispergierhilfsmitteln, Trocknungsverzögerern, vorgelegt und darin das Tensid und/oder Tensidgemisch unter Rühren eingerührt. Nach Homogenisierung wird unter intensivem Rühren, z.B. mit Hilfe eines Schnellrührers oder Dissolvers, bei einer Randgeschwindigkeit der Rührscheibe, vorzugsweise von 15–30 m.sec, das Wasser, bei einer Zuführgeschwindigkeit vorzugsweise von 30–70 l.min, eingearbeitet.

Die Arbeitstemperatur der beiden flüssigen Phasen soll vorzugsweise T = 280 °K bis T = °K betragen. In diesem Temperaturbereich lassen sich innerhalb von 10 Minuten nach Beendigung der Wasserzufuhr, Dispersionsfeinheiten im Bereich von 1–3 μm erreichen.

Das Tensid und/oder Tensidgemisch kann sowohl in die ölige als auch wäßrige Phase, vor der Vereinigung im Dispergieraggregat, eingearbeitet werden.

Nach einer anderen Ausführungsform des erfindungsgemäßen Verfahrens unter Verwendung einer Kolloidmühle oder eines Homogenisators erfolgt die Arbeitsweise ähnlich wie bei dem vorgenannten Verfahren, jedoch werden hier vorzugsweise die ölige oder wäßrige Phase mittels einer Dosiervorrichtung kurz vor dem Erreichen des Dispergierwertes (Mahlscheiben) vereinigt. Das Verhältnis der öligen zu der wäßrigen Phase sollte vorzugsweise im Bereich von 5:1 bis 2:1 liegen. Die «Vermahlung» erfolgt entsprechend der bei diesen Aggregaten üblichen Technik (Homogenisierungsdruck: 100:300 atü).

Bei diesem Verfahren wird das Endprodukt vorzugsweise in kontinuierlichem Verfahren, also ununterbrochen, konfektioniert, während bei dem erstgenannten Verfahren vorzugsweise eine diskontinuierliche Herstellung erfolgt.

Beispiele

1. Beispiel
Alkydharz (berechnet als Farbstoff)
Säurezahl 8
ÖlLänge 60%ig 20,0 Gew.-Teile
Pyrethroid (als Biozid) 0,1 Gew.-Teile
2,5-Dimethyl-N-cyclohexyl-N-
methoxy-3-furancarbonsäureamid 2,0 Gew.-Teile
Tensidgemisch bestehend aus
Ca-Alkylarylsulfonat und
Isopropylamin-dodecylbenzylsulfonat im Verhältnis 3:1 4,0 Gew.-Teile
Wasser 25,0 Gew.-Teile
wasserunlösliches organisch-
chemisches Lösungsmittelgemisch 48,9 Gew.-Teile
 100,0 Gew.-Teile

anorganische oder organische
Farbpigmente 3,0 Gew.-Teile
Trockenstoffe (Siccative) 0,1 Gew.-Teile
(berechnet als im Trockenstoff
enthaltendes Metall)

2. Beispiel
Alkydharz (berechnet als Farbstoff)
Säurezahl 5
ÖlLänge 45%ig
Phthalsäureanteil 26 Gew.-%
(bezogen auf 100 Gew.-% Alkydharz) 2,0 Gew.-Teile
trocknendes pflanzliches Öl 5,0 Gew.-Teile
Dekamethrin 0,001 Gew.-Teile
Hexachlorcyclohexan als
chlorierter Kohlenwasserstoff 1,0 Gew.-Teile
Bis-Tributrylzinnbenzoat 1,0 Gew.-Teile
2-Methoxycrbonyl-amino-
benzimidazol 1,0 Gew.-Teile
Tensidgemisch aus Polyoxy-
ethylen(30)-Nonylphenol
und/oder Polyalkylenglykoläther
und/oder Isopropylamin-
dodecylbenzylsulfonat
im Verhältnis von 10:10:1 4,5 Gew.-Teile
Wasser 30,0 Gew.-Teile
wasserunlösliches organisch-
chemisches Lösungsmittelgemisch 55,499 Gew.-Teile
 100,0 Gew.-Teile

anorganische und organische
Farbpigmente 2,0 Gew.-Teile
Trockenstoffe (Siccative) 0,1 Gew.-Teile

3. Beispiel
Alkydharz
Säurezahl 15
ÖlLänge 60

Phthalsäureanteil 32 Gew.-%
(bezogen auf 100 Gew.-% Alkydharz) ............................................. 22,0 Gew.-Teile
trocknendes pflanzliches Öl ........... 2,0 Gew.-Teile
Permethrin, Decamethrin,
Cypermethrin ................................. 2,0 Gew.-Teile
Cyano-(4-fluoro-3-phenoxy-
phenyl)-methyl-3-(2,2-dichloroethenyl)-2,2-dimethyl-cyclo-
propancarboxylat ........................... 1,0 Gew.-Teile
2,5-Dimethyl-N-cyclohexyl-N-
methoxy-3-furancarbonsäureamid 1,0 Gew.-Teile
2-Methoxycarbonyl-amino-
benzimidazol .................................. 1,0 Gew.-Teile
Tensidgemisch von Ca-Alkylarylsulfonat und Isopropylamin-
dodecylbenzylsulfonat
im Gewichtsverhältnis 1:1 .............. 4,5 Gew.-Teile
Wasser ........................................... 12,0 Gew.-Teile
wasserunlösliches organisch-
chemisches Lösungsmittelgemisch .......................................... 54,5 Gew.-Teile
                                                   100,0 Gew.-Teile
anorganische und organische
Farbpigmente ................................ 1,5 Gew.-Teile
Trockenstoffe (Siccative) ............... 1,5 Gew.-Teile

## Patentansprüche

1. Holzkonservierungsmittel, vorzugsweise Holzschutzanstrichmittel, enthaltend

1. 0,001–5 Gew.-Teile, vorzugsweise 0,001–4 Gew.-Teile (bezogen auf 100 Gew.-Teile des Holzkonservierungsmittels, vorzugsweise Holzschutzanstrichmittels, und berechnet ohne Pigmente, Farbstoffe, Korrosionsschutzmittel oder andere Zusatzstoffe), eines in einem wasserunlöslichen organisch-chemischen, schwerflüchtigen Lösungsmittel oder Lösungmittelgemisch, löslichen oder teilweise löslichen Biozides oder Biozidgemisches,

2. ein flüssiges Gemisch als Hauptbestandteil, bestehend aus

2.1 einem wasserunlöslichen organisch-chemischen, schwerflüchtigen Lösungsmittel oder Lösungsmittelgemisch, vorzugsweise auf der Basis eines flüssigen aliphatischen und/oder aromatischen Kohlenwasserstoffes, und

2.2 Wasser,

3. ein Tensid oder Tensigemisch, sowie ggf., bezogen auf 100 Gew.-Teile des Holzkonservierungsmittels, vorzugsweise Holzschutzanstrichmittels, Pigmente, Farbstoffe, Korrosionsschutzmittel, Trockenstoffe (Siccative) oder andere Zusatzstoffe, vorzugsweise Topfkonservierungsmittel, Antiabsetzmittel, Wachse oder Verbindungen mit wachsähnlichen Eigenschaften, dadurch gekennzeichnet, daß

2.1.1 der Gewichtsanteil des wasserunlöslichen organisch-chemischen, schwerflüchtigen, vorzugsweise öligen oder ölartigen Lösungsmittels oder Lösungsmittelgemisches, einschließlich des darin gelösten Alkydharzes und oder trocknenden pflanzlichen Öles, in dem Holzkonservierungsmittel, vorzugsweise Holzschutzanstrichmittel, größer ist als der Gewichtsanteil des Wassers und der Gewichtsanteil des Wassers um mehr als 3 Gew.-Teile, vorzugsweise mehr als 6 Gew.-Teile, unter den Gewichtsmengen der im Mittel enthaltenden organisch-chemischen, wasserunlöslichen, vorzugsweise öligen oder ölartigen organisch-chemischen Lösungsmittel oder des Lösungsmittelgemisches liegt, daß das Holzkonservierungsmittel, vorzugsweise Holzschutzanstrichmittel,

2.2.1 5–35 Gew.-Teile, vorzugsweise 10–30 Gew.-Teile Wasser,

3.1 0,7–7 Gew.-Teile, vorzugsweise 0,1–5 Gew.-Teile des Tensidgemisches, das einen Gesamt-HLB-Wert von 8–17 aufweist und mindestens ein Alkylarylsulfonat und/oder ein Derivat der Alkylarylsulfonsäure enthält, sowie

4. 0,5–35 Gew.-Teile, vorzugsweise 1–25 Gew.-Teile (berechnet als Feststoff) mindestens eines wasserunlöslichen, in dem organisch-chemischen Lösungsmittel oder Lösungsmittelgemisch löslichen Alkydharzes und/oder mindestens eines trocknenden, pflanzlichen Öles, mit der Maßgabe, daß sich der Gewichtsanteil des wasserunlöslichen, organisch-chemischen schwerflüchtigen, vorzugsweise öligen oder ölartigen Lösungsmittels oder Lösungsmittelgemisches ergänzt auf 100 Gew.-Teile des Holzkonservierungsmittels, vorzugsweise Holzschutzanstrichmittels, berechnet ohne Pigmente, Farbstoffe, Trockenstoffe (Siccative), Korrosionsschutzmittel oder andere Zusatzstoffe, vorzugsweise Trockenkonservierungsmittel, Antiabsetzmittel, Wachse oder Verbindungen mit wachsähnlichen Eigenschaften, ergibt.

2. Holzkonservierungsmittel, vorzugsweise Holzschutzanstrichmittel, nach Anspruch 1, dadurch gekennzeichnet, daß das in dem Holzkonservierungsmittel, vorzugsweise Anstrichmittel

4.1 enthaltende Alkydharz oder Alkydharzgemisch eine Säurezahl zwischen 1–45, vorzugsweise 2–20, eine Öllänge von 30–75, vorzugsweise 40–70, und einen Phthalsäureanteil zwischen 20–40 Gew.-%, vorzugsweise 25–35 Gew.-% (bezogen auf 100 Gew.-% Alkydharz oder Alkydharzgemisch) aufweist.

3. Holzkonservierungsmittel, vorzugsweise Holzschutzanstrichmittel, nach einem oder mehreren der Ansprüche 1 und 2, dadurch gekennzeichnet, daß je 100 Gew.-Teile des Holzkonservierungsmittels, vorzugsweise Holzschutzanstrichmittels zusätzlich 0,01–35 Gew.-Teile, vorzugsweise 0,1–5 Gew.-Teile mindestens eines Pigments und/oder Farbstoffes oder Mischungen von ein oder mehreren derselben im anwendungsfertigen Mittel enthalten sind.

4. Holzkonservierungsmittel, vorzugsweise Holzschutzanstrichmittel, nach einem oder mehreren der Ansprüche 1 bis 3, dadurch gekennzeichnet, daß das Tensidgemisch mindestens aus einem Alkylarylsulfonat und/oder einem Derivat der Alkylarylsulfonsäure und einem Polyoxyethylenderivat und/oder einem Polyalkylen- oder Polyalkylglykoläther oder -ester, und/oder eine oder mehrere Polyoxyethylengruppen und oder ein oder mehrere Fettsäuregruppen enthaltende oberflächenaktive, organisch-chemische Verbindung besteht.

5. Holzkonservierungsmittel, vorzugsweise Holzschutzanstrichmittel, nach einem oder mehreren der Ansprüche 1 bis 4, dadurch gekennzeichnet, daß das Biozid oder Biozidgemisch aus mindestens einem insektiziden Phosphorsäureester, Thiophosphorsäureester, Dithiophosphorsäureester, Thionophosphorsäureester, einem chlorierten Kohlenwasserstoff und/oder Carbamat, vorzugsweise einem Pyrethroid als Insektizid besteht, oder eine Kombination von mindestens einem anderen in dem organisch-chemischen Lösungsmittel löslichen Insektizid mit einem oder mehreren der genannten Insektiziden, vorzugsweise mit einem oder mehreren Pyrethroid(en), enthält.

6. Holzkonservierungsmittel, vorzugsweise Holzschutzanstrichmittel, nach einem oder mehrern der Ansprüche 1 bis 5, dadurch gekennzeichnet, daß als Pyrethroid oder Pyrethroidgemisch Permethrin, Decamethrin, Cypermethrin, Alphamethrin, Cyano-(4-fluoro-3-phenoxyphenyl)-methyl-3-(2,2-dichloroethenyl)-2,2-dimethyl-cyclopropancarboxylat oder Gemischen von einem oder mehreren dieser Verbindungen mit anderen Insektiziden im Holzkonservierungsmittel, vorzugsweise Holzschutzanstrichmittel, enthalten sind.

7. Holzkonservierungsmittel, vorzugsweise Holzschutzanstrichmittel, nach einem oder mehreren der Ansprüche 1 bis 6, dadurch gekennzeichnet, daß das Biozid aus Methylen-bis-thiocyanat, 3,4,5,6-Tetrachlor-Phthalsäuredinitril, Jodpropargylalkohol, 1-(4-Chlorphenoxyl)-3,3-dimethyl-1-(1H-1,2,4-triazol-1-yl)-2-butanon), Tris(N-Cyclohexyl-Diazeniumdioxi)-Aluminium, fungiziden Tributylzinnverbindungen, 2,6-Dimethyl-4-tridecyl-morpholin und/oder 1-((2-(2,4-dichlorophenyl)-1,3-dioxolan-2-ylmethyl))-1H-1,2,4-triazol und/oder N-(Dichlorfluormethyl-thio)-3,6-endomethylen-Delta-4-tetrahydrophthalimid als Fungizid oder Fungizidgemisch, vorzugsweise aus 2-Methoxycarbonyl-aminobenzimidazol und/oder 2,5-Dimethyl-N-cyclohexyl-N-methoxy-3-furancarbonsäureamid, besteht oder ein oder mehrere der Fungizide oder Fungizidgemische, enthält.

8. Holzkonservierungsmittel, vorzugsweise Holzschutzanstrichmittel, nach einem oder mehreren der Ansprüche 1 bis 7, dadurch gekennzeichnet, daß eine Mischung von zwei oder mehreren Tensiden im Gewichtsverhältnis von 20:1 bis 1:20, vorzugsweise 5:1 bis 1:5, im Holzschutzmittel enthalten ist.

9. Holzkonservierungsmittel, vorzugsweise Holzschutzanstrichmittel, nach einem oder mehreren der Ansprüche 1 bis 8, dadurch gekennzeichnet, daß das Tensid aus einem Gemisch von Isopropylamin-dodecylbenzylsulfonat und Polyoxyethylen-Sorbitan-Oleat-Laurat besteht.

10. Holzkonservierungsmittel, vorzugsweise Holzschutzanstrichmittel, nach einem oder mehreren der Ansprüche 1 bis 9, dadurch gekennzeichnet, daß das Tensid aus einem Gemisch von Polyoxyethylen(30)-Nonylphenol und Polyalkylglykoläther oder -ester und/oder Isopropylamin-dodecylbenzylsulfonat besteht.

11. Holzkonservierungsmittel, vorzugsweise Holzschutzanstrichmittel, nach einem oder mehreren der Ansprüche 1 bis 10, dadurch gekennzeichnet, daß das Tensid aus einem Gemisch von Ca-Alkylarylsulfonat und Isopropylamin-dodecylbenzylsulfonat besteht.

12. Verfahren zur Herstellung eines Holzkonservierungsmittels, vorzugsweise Holzschutzanstrichmittels, nach einem oder mehreren der Ansprüche 1 bis 11, dadurch gekennzeichnet, daß bei einer Arbeits- bzw. Verfahrenstemperatur von 278 °K–308 °K, vorzugsweise 280 °K–303 °K in einem schnellaufenden Mischaggregat, vorzugsweise einem Schnellrührer, Dissolver, einer Kolloidmühle oder einem Dispergator, das wasserunlösliche organisch-chemische, schwerflüchtige Lösungsmittel oder Lösungsmittelgemisch, einschließlich der darin gelösten oder löslichen Bestandteile (ölige Phase) oder einem oder mehrere Bestandteile der öligen Phase mit Wasser oder den Bestandteilen der wäßrigen Phase vermischt werden, wobei das Tensid und/oder Tensidgemisch in einer oder den beiden Phasen gelöst oder homogen bzw. nahezu homogen verteilt wird.

13. Verfahren nach Anspruch 12, dadurch gekennzeichnet, daß die Durchmischung mit einer derartigen Geschwindigkeit (bezogen auf den jeweiligen Abstand des Rührwerks von der Kesselwand und dem Radius des Rührwerkes) und so lange durchgeführt wird, bis die Verteilung der emulgierten Harzteilchen einen mittleren Durchmesser im Bereich von 0,1–15 μm, vorzugsweise 0,5–4 μm erreicht hat.

14. Verfahren nach den Ansprüchen 12 und 13, dadurch gekennzeichnet, daß die Durchmischung mit einer Rand- und/oder Umfangsgeschwindigkeit von 10–40 m/sec, vorzugsweise 15–30 m sec durchgeführt wird.

15. Verfahren nach einem oder mehreren der Ansprüche 12 bis 14, dadurch gekennzeichnet, daß das Wasser oder die wäßrige Phase mit einer Zuführungsgeschwindigkeit von 10–100 l/min, vorzugsweise 30–70 l/min in die ölige oder ölartige Phase (wasserunlösliches, organisch-chemisches Lösungsmittel und darin gelöste Bestandteile), die in dem Mischbehälter vorgelegt sind, eingeleitet wird.

16. Verfahren nach einem oder mehreren der Ansprüche 12 bis 15, dadurch gekennzeichnet, daß der Durchmesser der Scheibe oder des Rührers ¼ bis ¾ d (d = Durchmesser des Mischbehälters bzw. Kessels), vorzugsweise 0,3 d bis 0,4 d, beträgt.

17. Verfahren nach einem oder mehreren der Ansprüche 12 bis 16, dadurch gekennzeichnet, daß bei der Verwendung einer Kolloidmühle die Zuleitung von zwei oder mehreren Bestandteilen des Holzschutzmittels oder des gesamten Holzschutzmittels über eine Dosierpumpe erfolgt, wobei das Verhältnis der öligen Phase zu der wäßrigen Phase mit Tensid bzw. ölige Phase mit Tensid zu der wäßrigen Phase 20:1 bis 1:1, vorzugsweise 5:1 bis 2:1, beträgt.

**Claims**

1. Wood preservation agent, preferably a paint-on wood protection agent, containing

1. 0.0001–5 parts by weight, preferably 0.01–4 parts by weight (relative to 100 parts by weight of the wood preservation agent, preferably paint-on wood protection agent, and calculated without pigments, colourants, corrosion protection agents or other additives), of a biocide or biocide mixture which is soluble or partly soluble in a water-insoluble, organic-chemical, difficult to volatilise solvent or mixture of solvents,

2. a liquid mixture as a main constituent consisting of

2.1 a water-insoluble, organic-chemical, difficult to volatilise solvent or mixture of solvents, preferably on the basis of a liquid aliphatic and/or aromatic hydrocarbon, and

2.2 water,

3. a tenside or tenside mixture, and optionally, relative to 100 parts by weight of the wood preservation agent, preverably paint-on wood protection agent, pigments, colourants, corrosion, protection agents, paint driers (siccatives) or other additives, preferably pot preservation agents, anti-settling agents, waxes or compounds with wax-like properties, characterised in that

2.1.1 the proportion by weight of the water-insoluble, organic-chemical, difficult to volatilise, preferably oleaginous or oil-like solvent or mixture of solvents, including the alkyd resin and/or drying vegetable oil dissolved therein, in the wood preservation agent, preferably paint-on wood protection agent, is greater than the proportion by weight of the water, and the proportion by weight of the water lies below the quantities by weight of the organic-chemical, water-insoluble, preferably oleaginous or oil-like organic-chemical solvent or mixture of solvents contained in the agent by more than 3 parts by weight, preferably more than 6 parts by weight, that the wood preservation agent, preferably paint-on wood protection agent, has

2.2.1 5–35 parts by weight, preferably 10–30 parts by weight, water,

3.1 0.7–7 parts by weight, preferably 0.1–5 parts by weight, 70, and a phthalic acid portion of between 20–40% weight, preferably 25–35% weight (relative to 100% weight alkyd resin or alkyd resin mixture).

3. Wood preservation agent, preferably paint-on wood protection agent, according to one or more of claims 1 and 2, characterised in that per 100 parts by weight of the wood preservation agent, preferably paint-on wood protection agent, in addition 0.01–35 parts by weight, preferably 0.1–5 parts by weight, of at least one pigment and/or colourant or mixtures of one or more of the same are contained in the agent which is ready for use.

4. Wood preservation agent, preferably paint-on wood protection agent, according to one or more of claims 1 to 3, characterised in that the tenside mixture consists at least of one alkyl aryl sulphonate and/or a derivative of alkyl aryl sulphonic acid and a polyoxyethylene derivative and/or a polyalkylene or polyalkyl glycol ether or ester, and/or a surface-active organic-chemical compound containing one or more polyoxyethylene groups and/or one or more fatty acid groups.

5. Wood preservation agent, preferably paint-on wood protection agent, according to one or more of claims 1 to 4, characterised in that the biocide or biocide mixture consists of at least one insecticide phosphoric ester, thiophosphoric ester, dithioposphoric ester, thionophosphoric ester, a chlorinated hydrocarbon and/or carbamate, preferably a pyrethroid as an insecticide, or contains a combination of at least one other insecticide which is soluble in the organic-chemical solvent with one or more of the stated insecticides, preferably with one or more pyrethroid(s).

6. Wood preservation agent, preferably paint-on wood protection agent, according to one or more of claims 1 to 5, characterised in that permethrin, decamethrin, cypermethrin, alphamethrin, cyano-(4-fluoro-3-phenoxyphenyl)-methyl-3-(2,2-dichloroethenyl)-2,2-dimethyl-cyclopropane carboxylate or mixtures of one or more of these compounds are contained as the pyrethroid or pyrethroid mixture in the wood preservation agent, preferably paint-on wood protection agent with other insecticides.

7. Wood preservation agent, preferably paint-on wood protection agent, according to one or more of claims 1 to 6, characterised in that the biocide consists of methylene-bis-thiocyanate, 3,4,5,6-tetrachlorophthalic acid dinitrile, iodopropargyl alcohol, 1-(4-chlorophenoxyl)-3,3-dimethyl-1-(1H-1,2,4-triazol-1-yl)-2-butanone, tris(N-cyclohexyl-diazenium-dioxi)-aluminium, fungicidal tributyl tin compounds, 2,6-dimethyl-4-tricedylmorpholine and/or 1-((2-(2,4-dichlorophenyl)-1,3-dioxolan-2-ylmethyl))-1H-1,2,4-triazole and/or N-(dichlorofluoromethyl-thio)-3,6-endomethylene-delta 4-tetrahydrophthalimide as a fungicide or fungicide mixture, preferably of 2-methoxycarbonyl-aminobenzimidazole and/or 2,5-dimethyl-N-cyclohexyl-N-methoxy-3-furan-carboxylic acid amide, or contains one or more of the fungicides or fungicide mixtures.

8. Wood preservation agent, preferably paint-on wood protection agent, according to one or more of claims 1 to 7, characterised in that a mixture of two or more tensides, is contained in the wood preservation agent, in a weight ratio of 20:1 to 1:20, preferably 5:1 to 1:5.

9. Wood preservation agent, preferably paint-on wood protection agent, according to one or more of claims 1 to 8, characterised in that the tenside consists of a mixture of isopropylamine-dodecylbenzyl sulphonate and polyoxyethylene-sorbitan-oleate-laurate.

10. Wood preservation agent, preferably paint-on wood protection agent, according to one or more of claims 1 to 9, characterised in that the tenside consists of a mixture of polyoxyethylene(30)-nonylphenol and polyalkylglycol ether or ester and/or isopropylamine-dodecylbenzyl sulphonate.

11. Wood preservation agent, preferably paint-on wood protection agent, according to one or more of claim 1 to 10, characterised in that the tenside consists of a mixture of Ca-alkylaryl sulphonate and isopropylamine-dodecylbenzyl sulphonate.

12. Method for the production of a wood preservation agent, preferably paint-on wood protection agent, according to one or more of claims 1 to 11, characterised in that the water-insoluble, organic-chemical, difficult to volatilise solvent or mixture of solvents, including the constituents which are dissolved or soluble therein (oleaginous phase), or one or more constituents of the oleaginous phase are mixed with water or the constituents of the aqueous phase at an operating or process temperature of 278 °K–308 °K, preferably 280 °K–303 °K, in a high-speed mixing unit, preferably a high-speed stirrer, dissolver, a colloid mill or a disperser, the tenside and/or tenside mixture being dissolved in one or both phases or being distributed homogenously or almost homogenously.

13. Method according to claim 12, characterised in that the thorough mixing is carried out at such a speed (relative to the respective distance of the stirring mechanism from the vessel wall and the radius of the stirring mechanism) and until the distribution of the emulsified resin particles has reached an average diameter in the range 0.1–15 μm, preferably 0.5–4 μm.

14. Method according to claims 12 and 13, characterised in that the thorough mixing is carried out at an edge and/or peripheral speed of 10–40 m.sec, preferably 15–30 m/sec.

15. Method according to one or more of claims 12 to 14, characterised in that the water or the aqueous phase is introduced into the oleaginous or oil-like phase (water-insoluble, organic-chemical solvent and constituents dissolved therein), which are placed in the mixer vessel, at a supply rate of 10–100 l/min, preferably 30–70 l/min.

16. Method according to one or more of claims 12 to 15, characterised in that the diameter of the disc or the mixer is ¼ d to ¾ d (d = diameter of the mixer container or vessel), preferably 0.3 d to 0.4 d.

17. Method according to one or more of claims 12 to 16, characterised in that when a colloid mill is used the supply of two or more constituents of the wood preservation agent or the wood protection agent as a whole takes place via a metering pump, the ratio of the oleaginous phase to the aqueous phase with tenside or the oleaginous phase with tenside to the aqueous phase being 20:1 to 1:1, preferably 5:1 to 2:1.

## Revendications

1. Agent de conservation du bois, de préférence enduit de protection du bois, contenant

1. 0,001 à 5 parties en poids, de préférence 0,01 à 4 parties en poids (par rapport à 100 parties en poids de l'enduit de protection du bois, de préférence agent de conservation du bois, et en ne prenant pas en compte les pigments, les matières colorantes, l'agent anticorrosif ou d'autres additifs) d'un biocide ou d'un mélange de biocides soluble ou partiellement soluble dans un solvant ou un mélange de solvants organo-chimique, insoluble dans l'eau, peu volatil,

2. un mélange liquide comme composant principal, composé

2.1 d'un solvant ou d'un mélange de solvants organo-chimique, insoluble dans l'eau, peu volatil, de préférence à base d'un hydrocarbure liquide aliphatique et/ou aromatique, et

2.2 de l'eau,

3. un dérivé tensio-actif ou un mélange de dérivé tensio-actifs, ainsi que, le cas échéant, par rapport à 100 parties en poids de l'enduit de protection du bois, de préférence agent de conservation du bois, des pigments, des matières colorantes, un agent anti-corrosif, des dessicateurs (siccatifs), ou d'autres additifs, de préférence des produits conservateurs, des agents d'anti-redéposition, des cires ou des composés ayant des propriétés analogues à la cire, caractérisé en ce que

2.1.1 la proportion en poids, dans l'agent de conservation du bois, de préférence enduit de protection du bois, du solvant ou du mélange des solvants organo-chimique, insoluble dans l'eau, peu volatil, de préférence huileux ou oléagineux, y compris la résine alkyde et/ou d'huile végétale desséchante solubilisées dans celui-ci est plus grande que la proportion en poids d'eau, et la proportion en poids d'eau est inférieure de plus de 3 parties en poids, de préférence de plus de 6 parties en poids à la proportion en poids du solvant ou du mélange de solvants organo-chimique, insoluble dans l'eau, de préférence huileux ou oléagineux contenu dans l'agent, en ce que l'agent de conservation du bois, de préférence enduit de conservation du bois contient 2.1.1 5 à 35 parties en poids, de préférence 10 à 30 parties en poids d'eau,

3.1 0,7 à 7 parties en poids, de préférence 0,1 à 5 parties en poids d'un mélange de dérivés tensio-actifs, ayant une valeur HLB comprise entre 8 et 17 et contenant au moins un alkylarylsulfonate et/ou un dérivé de l'acide alkylarylsulfonique, ainsi que 0,5 à 35 parties en poids, de préférence 1 à 25 parties en poids (calculé sous forme solide) d'au moins une résine alkyde insoluble dans l'eau, soluble dans le solvant ou le mélange de solvants organo-chimique et/ou d'au moins une huile végétale desséchante, à condition de respecter la proportion en poids du solvant organo-chimique, insoluble dans l'eau, peu volatil, de préférence huileux ou oléagineux, par rapport à 100% en poids de l'agent de conservation du bois, de préférence enduit de protection du bois, sans tenir compte des pigments, des matières colorantes, des dessicateurs (siccatifs), des agents anticorrosifs ou des autres additifs, de préférence des produits conservateurs, des agents d'anti-redéposition, des cires ou des composés ayant des propriétés analogues à la cire.

2. Agent de conservation du bois, de préférence enduit de protection du bois, selon la revendication 1, caractérisé en ce que

4.1 la résine alkyde ou le mélange de résines alkydes contenu dans l'agent de conservation du bois, de préférence enduit de protection du bois, présente un indice d'acidité (mesuré d'après la norme DIN 53402) compris entre 1 et 45, de préférence entre 2 et 20, une longueur d'huile comprise entre 30 et 75, de préférence entre 40 et 70 et une proportion en acide phtalique comprise entre 20 et 40 % en poids, de préférence entre 25 et 35 % en poids (par rapport à 100 % en poids de résine alkyde ou de mélange de résines alkydes).

3. Agent de conservation du bois, de préférence enduit de protection du bois, selon l'une quelconque des revendications 1 et 2, caractérisé en ce que 100 parties en poids de l'agent de conservation du bois, de préférence enduit de protection du bois, contiennent en plus, 0,01 à 35 parties en poids, de préférence 0,1 à 5 parties en poids d'au moins un pigment et/ou matière colorante ou des mélanges d'un ou de plusieurs de ceux-ci.

4. Agent de conservation du bois, de préférence enduit de protection du bois, selon l'une quelconque des revendications 1 à 3, caractérisé en ce que le mélange de dérivés tensio-actifs consiste en au moins un alkylarylsulfonate et/ou un dérivé de l'acide alkylarylsulfonique et/ou un dérivé polyoxyéthylénique et/ou un éther ou ester polyalkylénique ou polyalkylglycolique, et/ou un composé organo-chimique tensio-actif contenant un ou plusieurs groupes polyoxyéthylène et ou un ou plusieurs groupes acide gras.

5. Agent de conservation du bois, de préférence enduit de protection du bois, selon l'une quelconque des revendications 1 à 4, caractérisé en ce que le biocide ou le mélange de biocides contenu dans l'agent de conservation du bois est constitué, en tant qu'insecticide, d'au moins un ester de l'acide phosphorique insecticide, un ester de l'acide thiophosphorique insecticide, un ester de l'acide dithiophosphorique insecticide, un ester de l'acide thionophosphorique insecticide, un hydrocarbure chloré et/ou un carbamate chloré, de préférence un pyréthroide, ou ledit agent de conservation du bois contient une combinaison d'au moins un autre insecticide soluble dans le solvant organo-chimique avec un ou plusieurs des insecticides mentionnés, de préférence avec un ou plusieurs pyréthroides.

6. Agent de conservation du bois, de préférence enduit de protection du bois, selon l'une quelconque des revendications 1 à 5, caractérisé en ce que l'agent de conservation du bois, de préférence enduit de protection du bois, contient, comme pyréthroide ou comme mélange de pyréthroides, de la perméthrine, de la décaméthrine, de la cyperméthrine, de l'alphaméthrine, du carboxylate de cyano-(4-fluoro-3-phénoxy-phényl)-méthyl-3-(2,2-dichloroéthènyl)-2,2-diméthyl-cyclopropane ou des mélanges d'un ou de plusieurs de ces composés avec d'autres insecticides.

7. Agent de conservation du bois, de préférence enduit de protection du bois, selon l'une quelconque des revendications 1 à 6, caractérisé en ce que le biocide contenu dans l'agent de conservation du bois est constitué, en tant que fongicide ou mélange de fongicides, d'un fongicide constitué de bis-thiocyanate de méthylène, de dinitrile de l'acide 3,4,5,6-tétrachloro-phthalique, d'alcool iodopropargylique, de 1-(4-chlorophénoxy)-3,3-diméthyl-1-(1H-1,2,4-triazol-1-yl)-2-butanone, de tris-(N-cyclohexyl-diazéniumdioxy)-aluminium, de composés fongicides tributylétain, de 2,6-diméthyl-4-tridécylmorpholine et/ou de 1-2-(2,4-dichlorophényl)-1,3-dioxolan-2-ylméthyl-1H-1,2,4-triazol et/ou de delta-4-tétrahydrophthalimide de N-(dichlorofluorométhylthio)-3,6-endométhylène, de préférence de 2-méthoxycarbonyl-amino-benzimidazol et/ou de l'amide de l'acide 2,5-diméthyl-N-cyclohexyl-N-méthoxy-3-furancarboxylique, ou contient un ou plusieurs de ces fongicides ou mélanges de fongicides.

8. Agent de conservation du bois, de préférence enduit de protection du bois, selon l'une quelconque des revendications 1 à 7, caractérisé en ce que l'agent de conservation du bois contient un mélange de deux ou de plusieurs dérivés tensio-actifs dans un rapport en poids de 20:1 à 1:20, de préférence 5:1 à 1:5.

9. Agent de conservation du bois, de préférence enduit de protection du bois, selon l'une quelconque des revendications 1 à 8, caractérisé en ce que le dérivé tensio-actif consiste en un mélange de sulfonate d'isopropylamine-dodécylbenzyle et de laurate et d'oléate de sorbitol de polyoxyéthylène.

10. Agent de conservation du bois, de préférence enduit de protection du bois, selon l'une quelconque des revendications 1 à 9, caractérisé en ce que le dérivé tensio-actif consiste en un mélange de polyoxyéthylène(30)-nonylphénol et ou d'ester glycolique de polyalkylène et/ou de sulfonate d'isopropylamine-dodécylbenzyle.

11. Agent de conservation du bois, de préférence enduit de protection du bois, selon l'une quelconque des revendications 1 à 10, caractérisé en ce que le dérivé tensio-actif consiste en un mélange d'alkylarylsulfonate de Ca et de l'isopropylamide-dodécylbenzylsulfonate.

12. Procédé de fabrication d'un agent de conservation du bois, de préférence enduit de protection du bois selon l'une quelconque des revendications 1 à 11, caractérisé en ce qu'on mélange à une température de travail ou de procédé comprise entre 278 °K et 308 °K, de préférence entre 278 °K et 303 °K, dans un appareil de mélange à haute vitesse, de préférence un agitateur à haute vitesse, un dissolveur, un concasseur de colloïdes ou un disperseur, le solvant ou le mélange de solvants organo-chimique, insoluble dans l'eau, peu volatil, y compris les composants (phase huileuse) dissous ou solubles dans celui-ci ou un ou plusieurs des composants de la phase huileuse, avec de l'eau ou avec les composants de la phase aqueuse, le dérivé tensio-actif et/ou le mélange de dérivés tensio-actifs étant solubilisé ou répartie de manière homogène ou presque homogène dans une ou dans les deux phases.

13. Procédé selon la revendication 12, caractérisé en ce que le mélange est réalisé à une vitesse telle (en prenant en considération la distance respective entre le dispositif de mélange et la paroi du récipient de mélange, le rayon de l'agitateur, etc.) et pendant un temps tel que le diamètre moyen des particules de résine émulsifiées soit compris entre 0,1 et 15 μm, de préférence entre 0,5 et 4 μm.

14. Procédé selon les revendications 12 et 13, caractérisé en ce que le mélange est réalisé avec une vitesse périphérique et/ou circonférentielle comprise entre 10 et 40 m/sec, de préférence entre 15 et 30 m/sec.

15. Procédé selon l'une quelconque des revendications 12 à14, caractérisé en ce que l'eau ou la phase aqueuse est introduite dans la phase huileuse ou oléagineuse (solvant organo-chimique, insoluble dans l'eau, y compris les composants solubilisés dans celui-ci) à une vitesse d'alimentation comprise entre 10 et 100 l/min, de préférence entre 30 et 70 l/min.

16. Procédé selon l'une quelconque des revendications 12 à 15, caractérisé en ce que le diamètre du plateau ou de l'agitateur est compris entre ¼ et ¾ d (d = diamètre du récipient de mélange), de préférence entre 0,3 d et 0,4 d.

17. Procédé selon l'une quelconque des revendications 12 à 16, caractérisé en ce que, lors de l'utilisation d'un concasseur de colloïdes, deux ou plusieurs composants de l'agent de protection du bois ou la totalité de l'agent de protection du bois est alimenté via une pompe doseuse, le rapport entre la phase huileuse et la phase aqueuse contenant le dérivé tensio-actif ou entre la phase huileuse contenant le dérivé tensio-actif et la phase aqueuse étant de 20:1 à 1:1, de préférence de 5:1 à 2:1.